# EUROPÄISCHE PATENTSCHRIFT

(11) **EP 2 678 666 B1**
(45) Veröffentlichungstag und Bekanntmachung des Hinweises auf die Patenterteilung: **17.04.2019**
(21) Anmeldenummer: 12700778.9
(22) Anmeldetag: 10.01.2012
(51) Int. Cl.: G06T 7/00, H04N 5/225, G01N 21/90

(54) **VERFAHREN UND VORRICHTUNG ZUM ERKENNEN VON BLASEN UND/ODER FALTEN AUF ETIKETTIERTEN BEHÄLTERN**
METHOD AND DEVICE FOR THE DETECTION OF BUBBLES AND/OR WRINKLES ON LABELED CONTAINERS
PROCÉDÉ ET DISPOSITIF POUR LA DÉTECTION DES BOULES ET/OU DES PLIS SUR DES RÉCIPIENTS ÉTIQUETÉS

(30) Priorität: 23.02.2011 DE 102011004584
(43) Veröffentlichungstag der Anmeldung: 01.01.2014
(60) Teilanmeldung: 19155876.6
(73) Patentinhaber: Krones AG, 93073 Neutraubling (DE)
(72) Erfinder: NIEDERMEIER, Anton, 93326 Abensberg (DE)
(74) Vertreter: Grünecker Patent- und Rechtsanwälte PartG mbB
(86) Internationale Anmeldenummer: PCT/EP2012/000088
(87) Internationale Veröffentlichungsnummer: WO 2012/113492

(56) Entgegenhaltungen:
- EP-A1- 1 985 997
- US-A- 5 987 159
- US-A1- 2002 195 577

## Beschreibung

Die Erfindung betrifft ein Verfahren und eine Vorrichtung zum Erkennen von Blasen und/oder Falten auf etikettierten Behältern.

Die Inspektion etikettierter Behälter auf Unversehrtheit erfolgt in Produktionsanlagen üblicherweise Bild gebend. Hierzu ist es beispielsweise aus der WO 03/104780 A1 bekannt, einen Produktstrom bestehend aus befüllten und etikettierten Behältern an einem Leuchtschirm vorbeizuführen und die Etiketten mit einer Kamera aufzunehmen. Hierbei begünstigen im ultravioletten oder infraroten Spektralbereich absorbierende Etiketten einen Kontrast gegenüber der befüllten Flasche, um Löcher in den Etiketten zu erkennen.

Die JP 2008-281477 A beschreibt weiterhin ein Verfahren zur Inspektion transparenter Etiketten auf transparenten Kunststoffflaschen. Durch Bestrahlung mit ultraviolettem Licht wird eine Fluoreszenz in den Etiketten angeregt, die sich als Kontrastunterschied zu dem nicht fluoreszierenden Behälter darstellen lässt. Somit lassen sich auch hier Löcher und Risse als Helligkeitsunterschiede in der Fluoreszenzdarstellung erkennen.

Die US 59 87 159 A beschreibt ein Verfahren zum kombinierten Beleuchten von etikettierten Flaschen im Auflicht und im Durchlicht, um Fremdkörper im Inneren halbdurchlässiger Flaschen zu erkennen. Hierzu werden zwei Blitzlichtquellen mit zugeordneten ringförmigen und flächenförmig abstrahlenden Leuchtschirmen zu beiden Seiten einer Transportstrecke verwendet, um jeweils drei Behälter gemeinsam für eine Kameraaufnahme zu beleuchten. Die Behälter werden beispielsweise in drei um 120° voneinander abweichenden Drehlagen aufgenommen. Hierbei wird in jeweils kurzer Abfolge eine Kameraaufnahme im Auflicht und im Durchlicht gemacht. Die Auflicht- und die Durchlichtbeleuchtung können sowohl mit gerichteter Beleuchtung als auch mit diffuser Beleuchtung vorgenommen werden.

Im Gegensatz zu Löchern verursachen Blasen und/oder Falten an Etiketten vergleichsweise geringe Kontraste in einer Bild gebenden Darstellung, die üblicherweise zudem von den zwangsläufig kontrastreichen Etikettenaufdrucken überlagert werden. Blasen und/oder Falten lassen sich daher anhand eines einzelnen Kamerabilds nicht mit ausreichender Zuverlässigkeit erkennen. Kommerziell erhältliche Inspektionsvorrichtungen für Blasen und/oder Falten bedienen sich daher abgespeicherter Referenzbilder des zu untersuchenden Etiketts.

Beim Betrieb derartiger Systeme ergeben sich jedoch vielfältige Probleme. Beispielsweise kann die Druckqualität zwischen unterschiedlichen Etikettenchargen schwanken, so dass die Referenzaufnahmen nicht nur regelmäßig aktualisiert sondern im Betrieb auch korrekt zugewiesen werden müssen. Da sich das Aktualisieren und Einlernen der Inspektionsvorrichtungen nicht vollständig automatisieren lässt, entstehen durch mögliche Bedienfehler erhebliche Risiken in der Qualitätskontrolle. Außerdem ist die Genauigkeit des Drucks und der Etikettierung kritisch für einen Vergleich mit zuvor abgespeicherten Bildern und somit für eine zuverlässige Erkennung von Blasen und/oder Falten.

Weiterhin entsteht bei unterschiedlich etikettierten Produkten, beispielsweise mit Etiketten in unterschiedlichen Sprachen, ein enormer Aufwand durch häufiges Aktualisieren und Einlernen derartiger Inspektionssysteme. Insgesamt ergibt sich aus der Verwaltung der Referenzbilder und dem Einlernen ein sehr hoher Aufwand für die Wartung und den Betrieb der Inspektionsanlagen sowie für die Schulung des Bedienpersonals. Es besteht daher der Bedarf, die bekannten Verfahren und Vorrichtungen in dieser Hinsicht zu verbessern.

Die gestellte Aufgabe wird mit einem Verfahren nach Anspruch 1 gelöst. Dieses umfasst die Schritte: a) Beleuchten eines zu untersuchenden Etiketts im Auflicht mit einem ersten Lichtblitz und Aufnehmen eines ersten Kamerabildes des derart beleuchteten Etiketts; b) Beleuchten des Etiketts mit wenigstens einem zweiten Lichtblitz im Auflicht mit einer gegenüber dem Schritt a) veränderten Richtcharakteristik und Aufnehmen wenigstens eines zweiten Kamerabildes des derart beleuchteten Etiketts; und c) Berechnen wenigstens eines Helligkeitsunterschieds zwischen dem ersten und zweiten Kamerabild.

Dadurch, dass zwei Aufnahmen ein und desselben Etiketts gemacht werden, ist das Vorhalten eines entsprechenden Referenzbilds in einer Datenbank entbehrlich. Es entfällt somit die Notwendigkeit zur Aktualisierung von Referenzbildern und zum nachfolgenden Einlernen der Blasen- und/oder Faltenerkennung. Chargenbedingte Qualitätsschwankungen des Etikettendrucks und/oder Schwankungen der Etikettenposition auf den Behältern wirken sich nicht auf die Ermittlung von Helligkeitsunterschieden aus.

Dadurch, dass wenigstens zwei Kamerabilder mit unterschiedlich gerichteter Beleuchtung aufgenommen werden, lassen sich Erhebungen des Etiketts, wie beispielsweise Blasen und/oder Falten, in den beiden Kamerabildern anhand von Schattenwürfen und/oder aufgehellten Bereichen mit unterschiedlicher Helligkeit abbilden. Dagegen lässt sich ein im Wesentlichen glattflächiger Etikettenaufdruck auch bei wechselnder Richtcharakteristik der Beleuchtung mit zumindest ähnlicher Helligkeit und/oder Kontrastierung abbilden, so dass sich in ebenen Etikettenbereichen trotz eines Aufdrucks keine oder nur geringe Helligkeitsunterschiede zwischen den einzelnen Kamerabildern ergeben. Somit lassen sich berechnete Helligkeitsunterschiede zwischen dem ersten und zweiten Kamerabild als Indikator für das Vorliegen einer Blase und/oder einer Falte des Etiketts verwenden. Hierbei stehen Blasen und/oder Falten stellvertretend für alle im Vergleich zu einem ordnungsgemäß angebrachten Etikett erhabene Fehlstellen, an denen ein Schattenwurf erzeugt werden kann. Dies schließt insbesondere abstehende Etikettenabschnitte an Etikettenrändern und/oder an Löchern in Etiketten ein.

Mit der Berechnung lässt sich ein Vergleich von Helligkeitswerten und eine Beurteilung von Helligkeitsunterschieden automatisiert durchführen, beispielsweise anhand standardisierter Rechenvorschriften und/oder eines Vergleichs mit Schwellenwerten und/oder vorgegebenen Helligkeitsmustern, wie beispielsweise Linien, Buchstaben, Symbole und dergleichen. Dadurch lassen sich Blasen und/oder Falten von Etikettenaufdrucken und/oder Reliefstrukturen im Etikett oder im etikettierten Behälter unterscheiden.

Unter einem berechneten Helligkeitsunterschied ist beispielsweise eine Unterschied von Helligkeitswerten korrespondierender Bildpunkte und/oder Auswertebereiche der jeweils zu vergleichenden Kamerabilder zu verstehen. Der Unterschied könnte unter anderem anhand eines berechneten Differenzkamerabilds oder dergleichen ausgewertet werden, beispielsweise durch Kontrast- und/oder Mustererkennung im berechneten Bild, und/oder als Datensatz, beispielsweise durch statistische Auswertung von Helligkeitswerten oder dergleichen.

Unter Lichtblitzen ist erfindungsgemäß eine beliebige sequentielle Abfolge von Beleuchtungszuständen mit unterschiedlicher Richtcharakteristik zu verstehen, sofern eine sequentielle Kamerabelichtung ermöglicht wird. Die Beleuchtung kann daher beliebig gepulst sein oder zwischen einzelnen Beleuchtungszuständen umgeschaltet werden. Lichtblitze ermöglichen jedoch insbesondere eine in der Praxis angestrebte Maximierung der Inspektionsgeschwindigkeit.

Bei einer besonders günstigen Ausgestaltung unterscheidet sich die Richtcharakteristik im Schritt a) und b) bezüglich eines Anteils an diffuser Beleuchtung, um unterschiedlich starke Schattenwürfe an Blasen und/oder Falten zu erzeugen. Etikettenaufdrucke lassen sich weitgehend unabhängig von dem Diffusionsgrad der Beleuchtung abbilden. Demgegenüber bildet sich an Blasen/Falten bei einer gerichteten Beleuchtung je nach Einfallsrichtung ein Schattenwurf und/oder eine Aufhellung aus, bei einer diffusen Beleuchtung dagegen nicht. Somit können Helligkeitsunterschiede zwischen einem mit diffuser Beleuchtung aufgenommenen Kamerabild und einem mit schräg einfallender gerichteter Beleuchtung aufgenommenen Kamerabild als charakteristisches Merkmal für die Erkennung von Erhebungen auf dem Etikett, wie beispielsweise Blasen oder Falten, verwendet werden.

Bei einer ebenfalls vorteilhaften Ausgestaltung unterscheidet sich die Richtcharakteristik im Schritt a) und b) bezüglich einer Haupteinfallsrichtung der Beleuchtung, um unterschiedlich gerichtete Schattenwürfe an Blasen und/oder Falten zu erzeugen. Etikettenaufdrucke lassen sich weitgehend unabhängig von der Einfallsrichtung gerichteter Beleuchtung in Kamerabildern darstellen. Dagegen ist die Darstellung von Erhebungen des Etiketts, wie beispielsweise Falten und/oder Blasen vergleichsweise stark von der Einfallsrichtung gerichteter Beleuchtung abhängig. Insbesondere die Lage von aufgehellten Bereichen und Schattenwürfen an Blasen und/oder Falten ist von der Einfallsrichtung gerichteter Beleuchtung abhängig. Somit können Helligkeitsunterschiede zwischen dem ersten und zweiten Kamerabild aufgrund unterschiedlicher Haupteinfallsrichtungen als charakteristisches Merkmal für das Vorliegen einer Blase und/oder Falte auf dem Etikett verwendet werden.

Vorzugsweise werden im Schritt c) Helligkeitswerte des ersten und zweiten Kamerabilds in einander entsprechenden Bereichen des abgebildeten Etiketts miteinander verrechnet, wobei das Verrechnen insbesondere eine Subtraktion der Helligkeitswerte und/oder eine Angleichung einer mittleren Helligkeit des ersten und zweiten Kamerabilds umfasst. Dadurch lässt sich der Einfluss eines Etikettenaufdrucks bei der Erkennung der Blasen/Falten besonders einfach und effektiv unterdrücken. Da der Etikettenaufdruck in dem ersten und zweiten Kamerabild in gleicher oder ähnlicher Weise abgebildet ist, führt eine Subtraktion der Kamerabilder zu einer kontrastarmen Differenzdarstellung des Etikettenaufdrucks. Eine Anpassung der mittleren Helligkeit des ersten und zweiten Kamerabilds ermöglicht eine besonders kontrastarme Differenzdarstellung.

Vorzugsweise wird der Behälter beim Aufnehmen des ersten und zweiten Kamerabilds transportiert. Dadurch ist es möglich, einen kontinuierlichen Produktstrom aus etikettierten Behältern zu inspizieren. Der Behälter wird vorzugsweise relativ zur Beleuchtung des Etiketts und relativ zur Kamera bewegt. Es wäre allerdings auch möglich, die Beleuchtung und/oder die Kamera zumindest abschnittsweise mit dem Behälter mitzubewegen. Der Behälter wird während der Inspektion vorzugsweise linear oder entlang einer Kreisbahn transportiert.

Bei einer besonders günstigen Ausgestaltung werden das erste und zweite Kamerabild in einem Zeitabstand von höchstens 500 µs, insbesondere von höchstens 100 µs aufgenommen. Dadurch können zwei im Wesentlichen identische Aufnahmen des zu untersuchenden Etiketts mit einer Kamera aufgenommen werden. Das heißt, die Position und die Perspektive des Behälters im Bildbereich der Kamera ändern sich nur so geringfügig, dass sich die korrespondierenden Kamerabilder ein und desselben Etiketts auf einfache Weise und mit großer Geschwindigkeit miteinander verrechnen lassen.

Vorzugsweise wird das Etikett mit infrarotem Licht beleuchtet. Etikettenaufdrucke erscheinen bei infraroter Beleuchtung in der Regel mit geringerem Kontrast als im sichtbaren Spektralbereich. Dagegen sind Aufhellungen und/oder Schattenwürfe an Blasen und/oder Falten im infraroten und sichtbaren Spektralbereich vergleichbar stark kontrastiert. Dadurch ergibt sich bei infraroter Beleuchtung eine kontrastreichere Darstellung von Aufhellungen und/oder Schattenwürfen im Vergleich zu Etikettenaufdrucken. Folglich lassen sich Etikettenaufdrucke für die Auswertung von Helligkeitsunterschieden an Blasen und/oder Falten im infraroten Spektralbereich leichter unterdrücken und Blasen/Falten mit größerer Zuverlässigkeit erkennen.

Bei einer günstigen Ausgestaltung unterscheidet sich die Beleuchtung im Schritt a) und b) bezüglich ihres Spektralbereichs. Dadurch lässt sich, beispielsweise in Kombination mit unterschiedlichen Einfallsrichtungen, ein Helligkeitsunterschied an Blasen und/oder Falten qualitativ beurteilen und/oder die Plausibilität der Auswertung beurteilen. Es lässt sich beispielsweise feststellen, ob eine Aufhellung im ersten Kamerabild mit einem Schattenwurf im zweiten Kamerabild korrespondiert und/oder in einer zu erwartenden Lagebeziehung steht.

Die gestellte Aufgabe wird ferner gelöst mit einer Vorrichtung nach Anspruch 10. Diese umfasst: eine Beleuchtungseinrichtung zum sequentiellen Beleuchten eines zu untersuchenden Etiketts im Auflicht mit einem ersten Lichtblitz einer ersten Richtcharakteristik und mit wenigstens einem zweiten Lichtblitz einer zweiten, davon abweichenden Richtcharakteristik; wenigstens eine Kamera zum Aufnehmen des Etiketts in wenigstens einem ersten Kamerabild bei Beleuchtung mit der ersten Richtcharakteristik und in wenigstens einem zweiten Kamerabild bei Beleuchtung mit der zweiten Richtcharakteristik; und eine Auswerteeinheit zum Berechnen wenigstens eines Helligkeitsunterschieds zwischen dem ersten und zweiten Kamerabild. Es lassen sich die gleichen Vorteile erzielen wie mit dem erfindungsgemäßen Verfahren.

Vorzugsweise umfasst die Beleuchtungseinrichtung wenigstens einen Flächenstrahler und/oder mehrere Lichtquellen, um das Etikett diffus zu beleuchten. Damit lässt sich eine Beleuchtung bereitstellen, bei der die Etikettenaufdrucke gleichmäßig ausgeleuchtet werden und Blasen und/oder Falten kontrastarm dargestellt werden. Mit Flächenstrahlern, wie beispielsweise Leuchtschirmen oder Leuchtdiodenpaneelen, lässt sich eine diffuse Bestrahlung auf besonders einfache und kompakte Weise bereitstellen. Mehrere räumlich verteilte Lichtquellen eignen sich beim gemeinsamen Betrieb für eine diffuse Beleuchtung und im Einzelbetrieb oder als Gruppe ebenso für eine gerichtete Bestrahlung.

Vorzugsweise umfasst die Beleuchtungseinrichtung wenigstens einen gerichteten Strahler, um auf dem Etikett einen Schattenwurf an Blasen und/oder Falten zu erzeugen, insbesondere einen im Wesentlichen vertikalen Schattenwurf. Dadurch lassen sich Blasen und/oder Falten besonders zuverlässig erkennen. Ein vertikaler Schattenwurf, also im Wesentlichen parallel zur Hauptachse des Behälters ist besonders günstig, um einen möglichst großen Bereich des Etiketts auch auf gekrümmten Behälterwänden zu überprüfen. Außerdem lassen sich die in der Praxis häufig horizontal verlaufende Etikettenfalten besonders zuverlässig erkennen.

Eine besonders vorteilhafte Ausführungsform der erfindungsgemäßen Vorrichtung umfasst ferner ein Transportmittel, um den Behälter während der Bildaufnahme zu transportieren. Dadurch lässt sich ein kontinuierlicher Produktstrom aus etikettierten Behältern untersuchen, insbesondere ohne die Transportbewegung unterbrechen oder abbremsen zu müssen. Das Transportmittel kann beispielsweise ein linearer Transporteur sein oder ein Karussell, z. B. ein Etikettierkarussell. An dem Transportmittel können drehbare Halterungen vorgesehen sein, um das erfindungsgemäße Verfahren bei unterschiedlichen Drehlagen des Behälters durchzuführen.

Vorzugsweise ist die Beleuchtungseinrichtung zur sequentiellen Kamerabelichtung mit einem Belichtungsabstand von höchstens 500 µs, insbesondere von höchstens 100 µs ausgebildet. Dadurch lassen sich zwei Kamerabilder mit im Wesentlichen identischer Behälter- und Etikettenposition im Kamerabild sowie identischer Abbildungsperspektive erstellen. Mit den spezifizierten Belichtungsabständen lassen sich hohe Maschinenleitungen realisieren, ohne die Zuverlässigkeit und die Genauigkeit der Blasen- und/oder Faltenerkennung einzuschränken.

Vorzugsweise sind an der Beleuchtungseinrichtung wenigstens zwei gerichtete Strahler vorgesehen, um an Blasen und/oder Falten wenigstens zwei Schattenwürfe in unterschiedlichen Richtungen zu erzeugen, insbesondere in einander entgegen gesetzten und/oder zueinander orthogonalen Richtungen. Dadurch lassen sich unterschiedlich geformte und/oder orientierte Falten und Blasen mit besonders großer Zuverlässigkeit identifizieren. Außerdem lässt sich eine Plausibilitätskontrolle der erkannten Blasen und/oder Falten durchführen, in dem erkannte Aufhellungen und Schattenwürfe miteinander verglichen werden. Es kann damit insbesondere überprüft werden, ob die Lage von Schattenwürfen und Aufhellungen bei sequentieller Belichtung mit den gerichteten Strahlern in einer zu erwartenden Weise wechselt.

Bevorzugte Ausführungsformen der Erfindung sind in der Zeichnung dargestellt. Es zeigen:
Fig. 1 einen schematischen Querschnitt durch eine Ausführungsform der erfindungsgemäßen Vorrichtung;
Fig. 2 eine Draufsicht auf eine nicht erfindungsgemäße Vorrichtung;
Fig. 3 eine schematische Darstellung eines nicht erfindungsgemäßen Verfahrens; und
Fig. 4 eine schematische Darstellung des erfindungsgemäßen Verfahrens.

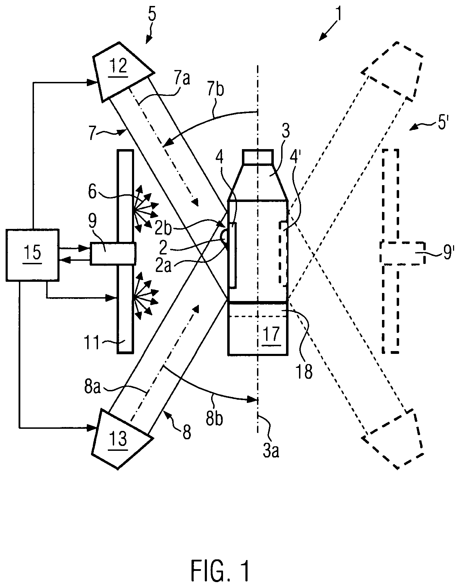

Wie die Fig. 1 erkennen lässt, umfasst die erfindungsgemäße Vorrichtung 1 zum Erkennen von Blasen 2 und/oder Falten oder dergleichen (nachfolgend auch lediglich als Blasen 2 bezeichnet) auf an Behältern 3 angebrachten Etiketten 4 in einer ersten Ausführungsform eine Beleuchtungseinrichtung 5 zum wahlweisen Erzeugen diffuser Beleuchtung 6 oder gerichteter Beleuchtung 7, 8 zur Auflichtbestrahlung des Etiketts 4 sowie wenigstens eine Kamera 9 zum Abbilden des mit unterschiedlicher Richtcharakteristik beleuchteten Etiketts 4. Die Kamera 9 ist beispielsweise eine Matrixkamera mit einem flächigen Sensorelement. Die Behälter 3 sind beispielsweise Getränkeflaschen, insbesondere Flaschen aus PET.

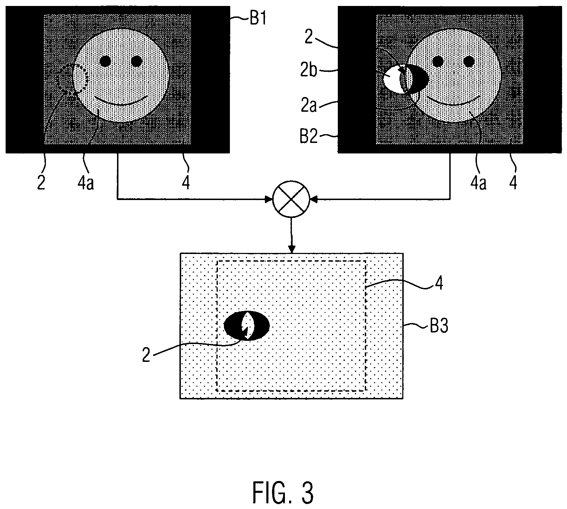

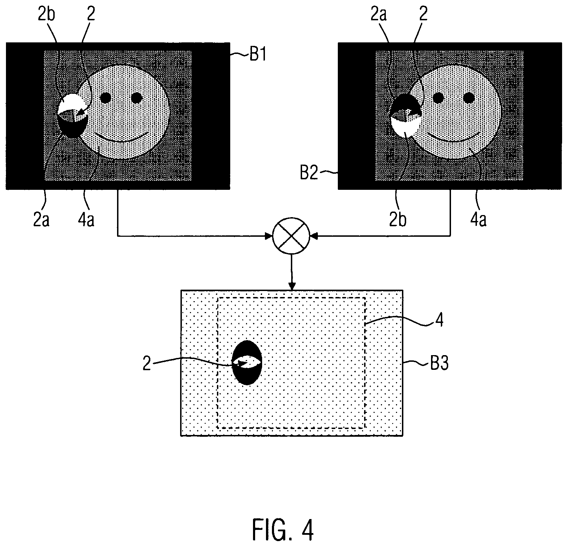

Zum Erzeugen der diffusen Beleuchtung 6 ist vorzugsweise ein Flächenstrahler 11 vorgesehen, beispielsweise eine Leuchte mit einer Streuscheibe oder ein Leuchtdiodenschirm. Es wäre aber auch denkbar, beliebige Lichtquellen räumlich derart zu verteilen, dass das von den Lichtquellen ausgehende Licht sich auf dem Etikett 4 zu einer im Wesentlichen diffusen Beleuchtung 6 addiert. Zum Erzeugen der gerichteten Beleuchtung 7, 8 sind Richtstrahler 12, 13 vorgesehen, wobei sich die Haupteinfallsrichtungen 7a, 8a der gerichteten Beleuchtung 7, 8 im Bereich des Etiketts 4 unterscheiden, um an Blasen 2 auf dem Etikett 4 unterschiedliche Schattenwürfe 2a zu erzeugen. Dies ist in der Fig. 1 zur Verdeutlichung lediglich für die gerichtete Bestrahlung 7 von schräg oben angedeutet. Je nach Beschaffenheit und Aufdruck 4a des Etiketts 4 können an den Blasen 2 Aufhellungen 2b mit Hilfe der gerichteten Bestrahlung 7, 8 erzeugt werden, wie beispielsweise in den Fig. 3 und 4 angedeutet.

Es ist ferner eine Auswerte- und Steuereinheit 15 vorgesehen, um die Beleuchtungseinrichtung 5 und die Kamera 9 anzusteuern. Die Auswerte- und Steuereinheit 15 dient ferner zum Auslesen und Auswerten von mit der Kamera 9 erzeugten Kamerabildern B1, B2, wie nachfolgend unter Bezugnahme auf die Fig. 3 und 4 noch ausführlicher erläutert wird. In der Fig. 1 sind Signale und Datenströme zum Steuern und Auslesen jeweils durch Pfeile symbolisiert. Es versteht sich hierbei von selbst, dass die Ansteuerung sowie das Auslesen und Auswerten von Daten auch in getrennten Einheiten erfolgen kann.

Die erfindungsgemäße Vorrichtung 1 umfasst ferner ein Transportmittel 17, um den Behälter 3 während der Etiketteninspektion kontinuierlich zu transportieren, beispielsweise in der Fig. 1 in die Zeichenebene hinein oder aus dieser heraus. Das Transportmittel 17 kann eine lineare Transportstrecke im Bereich der Beleuchtungseinrichtung 5 umfassen oder um eine vertikale Achse rotieren, wie beispielsweise bei einem Karussell einer Etikettiermaschine. An dem Transportmittel 17 können ferner drehbare Halterungen 18 für die Behälter 3 vorgesehen sein, beispielsweise Drehteller oder Klammern, um die Behälter 3 zwischen aufeinanderfolgenden Inspektionen um ihre Hauptachse 3a zu drehen. Die drehbare Halterung 18 könnte beispielsweise dazu verwendet werden, zwischen zwei um 180° versetzten Drehlagen des Behälters 3 zu wechseln. Dadurch könnte zunächst ein erstes Etikett 4 untersucht werden und nach dem Wechsel der Drehlage ein entgegengesetzt angeordnetes zweites Etikett 4', das in der Fig. 1 gestrichelt angedeutet ist. Während der Inspektion ein und desselben Etiketts 4, 4' wird die Drehlage des Behälters 3 jedoch vorzugsweise nicht verändert.

Für eine beidseitige Inspektion des Behälters 3 wäre es auch denkbar, eine weitere Beleuchtungseinrichtung 5' und eine weitere Kamera 9' auf der gegenüber liegenden Seite des Transportmittels 17 vorzusehen, wie in Fig. 1 gestrichelt angedeutet. In diesem Fall könnten Etiketten 4, 4' auf der Vorder- und der Rückseite des Behälters 3 gleichzeitig inspiziert werden.

Die in der Fig. 1 gezeigte Vorrichtung eignet sich besonders gut zum Erkennen von Blasen 2 und horizontal verlaufenden Falten. Zu diesem Zweck erfolgt die gerichtete Bestrahlung 7, 8 von schräg oben und von schräg unten auf das Etikett 4 zu. Der jeweilige Einfallswinkel 7b, 8b zwischen der Haupteinfallrichtung 7a, 8a und der Hauptachse 3a des Behälters 3 ist in diesem Fall nicht größer als 45°. Besonders günstig sind Winkel 7b, 8b von höchstens 30°. Damit lässt sich ein ausgeprägter Schattenwurf an Blasen 2 und horizontal verlaufenden Falten erzeugen.

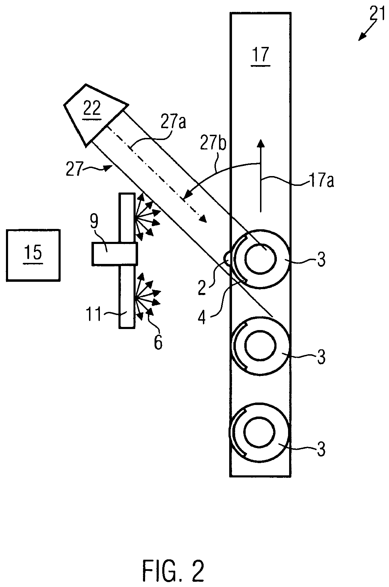

Die Fig. 2 zeigt eine schematische Draufsicht auf eine zweite, nicht erfindungsgemäße Ausführungsform 21 der Vorrichtung, die sich besonders gut zur Erkennung von Blasen 2 und vertikal verlaufenden Falten des Etiketts 4 eignet. Hierbei unterscheidet sich die zweite Ausführungsform 21 von der ersten Ausführungsform 1 im Wesentlichen nur durch den Richtstrahler 22 und die gerichtete Beleuchtung 27, die in diesem Fall schräg aus einer seitlichen Richtung einfällt. Die Haupteinfallrichtung 27a bildet mit der Transportrichtung 17a des Transportmittels 17 hierbei einen Winkel 27b aus, der vorzugweise nicht größer als 45° ist. Ferner verläuft die Haupteinfallsrichtung 27a vorzugsweise, jedoch nicht zwangsläufig, horizontal, also orthogonal zur Behälterhauptachse 3a.

Die in den Fig. 1 und 2 dargestellten Richtstrahler 12, 13 und 22 und die zugeordneten Haupteinfallsrichtungen 7a, 8a, 27a sind allerdings lediglich beispielhaft. Es sind beliebige Kombinationen unterschiedlich gerichteter Beleuchtungen für die Bildaufnahme des Etiketts 4 denkbar, und zwar sowohl bezüglich der jeweiligen Haupteinfallsrichtung als auch bezüglich des Anteils an diffusem Licht und/oder der Strahldivergenz. Entscheidend ist eine Belichtung von wenigstens zwei miteinander korrespondierenden Kamerabildern B1, B2 des Etiketts 4 bei unterschiedlich ausgerichteter Etikettenbeleuchtung.

Vorzugsweise wird das Etikett 4 in den Kamerabildern B1, B2 jeweils vollständig und möglichst in übereinstimmendem Bildbereichen abgebildet. Es kann aber auch nur ein bestimmter Etikettenbereich von besonderem Interesse abgebildet werden. Da sich der Behälter 3 während der Etiketteninspektion mit dem Transportmittel 17 bewegt, sollten miteinander zu vergleichende Kamerabilder B1, B2 eines Etiketts 4 mit möglichst geringem Zeitabstand aufgenommen werden. Besonders vorteilhaft sind Zeitabstände von höchstens 500 µs, insbesondere von höchstens 100 µs zwischen korrespondierenden Aufnahmen des Etiketts 4. Es ist dann beispielsweise möglich, das erste Kamerabild B1 im Matrixsensor der Kamera 9 zwischenzuspeichern und das zweite Kamerabild B2 aufzunehmen, bevor das erste Kamerabild B1 ausgelesen wurde.

Die Belichtung mit den unterschiedlich gerichteten Beleuchtungen 6, 7, 8, 27 ist sequentiell und erfolgt vorzugsweise mittels einer zeitlich koordinierten Abfolge von Lichtblitzen, insbesondere in Form wenigstens eines Doppelblitzes. Dieser kann beispielsweise aus einem diffusen Blitz und einem gerichteten Blitz bestehen. Derartige gepulste Beleuchtungen 6, 7, 8, 27 werden vorzugsweise mit Leuchtdioden produziert. Die Beleuchtungseinrichtung 5 könnte derart angesteuert werden, dass zuerst der Flächenstrahler 11 einen ersten Belichtungsblitz abgibt und danach der obere Richtstrahler 12 einen zweiten Belichtungsblitz, oder umgekehrt. Erfindungsgemäß ist, dass der obere Richtstrahler 12 und der untere Richtstrahler 13 je einen Belichtungsblitz abgeben. Je nach Behälterform, Etikettenaufdruck, Form und Orientierung von Blasen 2 und/oder Falten sind beliebige sequentielle Kombinationen diffuser und/oder gerichteter Beleuchtung 6, 7, 8, 27 denkbar. Entscheidend hierbei ist, dass sich die Belichtungsverhältnisse der Kamerabilder B1, B2 unterscheiden. Dies wird durch die unterschiedliche Richtwirkung und die zeitliche Trennung der eingesetzten Beleuchtung 6, 7, 8, 27 erzielt.

Die Beleuchtung 6, 7, 8, 27 erfolgt vorzugsweise mit infraroten Licht, um ein besonders günstiges Signalverhältnis zwischen Schattenwürfen 2a, Aufhellungen 2b und durch den Etikettenaufdruck 4a verursachten Kontrastunterschieden zu erzielen. Es wäre auch denkbar, die Kamera 9 für die Kamerabilder B1, B2 mit Licht unterschiedlicher Spektralbereiche zu belichten, so dass die in den jeweiligen Spektralbereichen erzeugten Schattenwürfe 2a und Aufhellungen 2b getrennt erfasst werden können, beispielsweise mittels Filterung und/oder selektiver Bildbearbeitung.

Die beschriebenen Ausführungsformen 1, 21 der Vorrichtung lassen sich beliebig kombinieren, um beispielsweise Blasen 2 und in beliebiger Richtung verlaufende Falten besonders zuverlässig erkennen zu können. Die Ausführungsformen 1, 21 können dazu auch an unterschiedlichen Abschnitten der Produktionslinie angeordnet sein.

Obwohl sich die Beleuchtungen 6, 7, 8, 27 zum Belichten der Kamerabilder B1, B2 bezüglich ihrer Richtcharakteristik unterscheiden, ist es doch wünschenswert, das Etikett 4 möglichst mit gleichbleibender Gesamthelligkeit und Helligkeitsverteilung ausleuchten, um den Etikettenaufdruck 4a in den korrespondierenden Kamerabildern B1, B2 möglichst identisch abzubilden. Es lässt sich dann durch einfache Bildbearbeitung und/oder Differenzbildung von einander entsprechenden Bildbereichen der Kamerabilder B1, B2 der Etikettenaufdruck 4a für die Erkennung der Blasen 2 und/oder Falten unterdrücken. Dies wird nachfolgend anhand einer nicht erfindungsgemäßen und einer erfindungsgemäßen Variante des Verfahrens beschrieben:
Ein kontinuierlicher Produktstrom aus etikettierten Behältern 3 wird mit dem Transportmittel 17 durch die Inspektionsvorrichtung 1, 21 transportiert und die Etiketten 4 dabei in einer kurzen Abfolge von Lichtblitzen mit unterschiedlicher Richtcharakteristik beleuchtet und von der Kamera 9 in jeweils wenigstens einem Kamerabild B1, B2 abgebildet. Es versteht sich hierbei von selbst, dass eine beliebige Anzahl miteinander korrespondierender Kamerabilder desselben Etiketts 4 aufgenommen und ausgewertet werden könnte.

In der Fig. 3 sind korrespondierende Kamerabilder B1, B2 schematisch wiedergegeben, wie sie beispielsweise mit der zweiten Ausführungsform 21 aufgenommen werden könnten. Demnach wird das erste Kamerabild B1 mit der diffusen Beleuchtung 6 belichtet, so dass die gepunktet angedeutete Blase 2 nicht oder nur mit sehr geringem Kontrastunterschied im Kamerabild B1 abgebildet wird. Der Etikettenaufdruck 4a wird bei diffuser Beleuchtung 6 dagegen kontrastreich abgebildet.

Mit einem zeitlichen Abstand von vorzugsweise nicht mehr als 100 µs löst die Steuereinheit 15 an dem Richtstrahler 22 die gerichtete Beleuchtung 27 in Form eines zweiten Lichtblitzes aus, mit dem das Etikett 4 schräg aus einer seitlichen Richtung beleuchtet wird, um an der Blase 2 einen Schattenwurf 2a zu erzeugen. Wie die Fig. 3 ferner erkennen lässt, wird an der Blase 2 zusätzlich eine Aufhellung 2b erzeugt. Außerdem ist auch die gerichtete Beleuchtung 27 derart ausgebildet, dass der Etikettenaufdruck 4a kontrastreich abgebildet wird.

Die diffuse Beleuchtung 6 und die gerichtete Beleuchtung 27 können hinsichtlich einer möglichst übereinstimmenden Ausleuchtung des Etikettenaufdrucks 4a abgeglichen werden, so dass dieser in den korrespondierenden Kamerabildern B1, B2 mit im Wesentlichen übereinstimmenden oder zumindest ähnlichen Helligkeitswerten abgebildet ist. Ebenso können die aufgenommenen Kamerabilder B1, B2 zwecks Abgleich nachbearbeitet werden, beispielsweise durch Helligkeits- und/oder Kontrastanpassung und/oder Filterung. Einander entsprechende Bildbereiche der Kamerabilder B1, B2 können dann miteinander verrechnet werden, beispielsweise durch Differenzbildung von Helligkeitswerten korrespondierender Bildpunkte oder Auswertebereiche der Kamerabilder B1, B2. Dadurch lässt sich der Etikettenaufdruck 4a für die Erkennung von Blasen 2 und/oder Falten in einem anhand der korrespondierenden Kamerabildern B1, B2 berechneten Kamerabild B3 effektiv unterdrücken.

Dagegen ist die Blase 2 im zweiten Kamerabild B2 vom Schattenwurf 2a und der Aufhellung 2b kontrastreich umrissen. Bei einer Verrechnung der korrespondierenden Kamerabilder B1, B2 bleibt dieser Kontrastunterschied im Bereich der Blase 2 im berechneten Kamerabild B3 im Wesentlichen erhalten, während der Etikettenaufdruck 4a unterdrückt wird. Dies ist als Berechnungsergebnis im berechneten Kamerabild B3 der Fig. 3 jeweils als dunkle sichelförmige Umrandung der Blase 2 angedeutet. Für die Auswertung der korrespondierenden Kamerabilder B1, B2 ist es unerheblich, ob ein Schattenwurf 2a oder eine Aufhellung 2b als Berechnungsergebnis letztendlich hell oder dunkel dargestellt wird. Für die Auswertung kann beispielsweise der Schattenwurf 2a invertiert werden oder die Aufhellung 2b. Die Verrechnung der korrespondierenden Kamerabilder B1, B2 lässt sich nahezu beliebig an unterschiedliche Etikettenaufdrucke anpassen, beispielsweise an einen sehr hellen, dunklen oder kontrastreichen Aufdruck, um diesen effektiv zu unterdrücken und Blasen 2 zu identifizieren.

Für die Auswertung kann ein Schwellenwert festgelegt werden, mit dem das Berechnungsergebnis, also beispielsweise Helligkeitswerte des berechneten Kamerabilds B3, verglichen werden. Als charakteristisches Merkmal für das Vorliegen einer Blase 2 und/oder Falte könnte dann eine bestimmte Anzahl von Bildpunkten sein, deren Helligkeitswert den Schwellenwert übersteigt. Denkbar sind auch geometrische Muster, Zeichen oder Symbole, als Vergleichskriterium für eine Gruppe von Bildpunkten, deren Helligkeit in einem bestimmten Bereich liegt. Hier sind generell nahezu beliebige Rechenvorschriften denkbar, die sich flexibel an unterschiedliche Etikettentypen, Aufdrucke, Behälterformen und dergleichen anpassen lassen.

Die Fig. 4 verdeutlicht eine Variante, wie sie beispielsweise mit der ersten Ausführungsform 1 realisierbar wäre. Gezeigt ist ein Beispiel, bei dem das erste Kamerabild B1 mit einer gerichteten Beleuchtung 7 von schräg oben aufgenommen wird, beispielsweise mit dem Richtstrahler 12, und das zweite Kamerabild B2 mit einer gerichteten Beleuchtung 8 von schräg unten, beispielsweise mit dem Richtstrahler 13. Auch in diesem Fall sind die Beleuchtungen so ausgebildet, dass der Etikettenaufdruck 4a bei der Verrechnung unterdrückt werden kann. Die Positionen des Schattenwurfs 2a und der Aufhellung 2b entsprechen sich in beiden Kamerabildern B1, B2 spiegelbildlich. Dies könnte für zusätzliche Plausibilitätsprüfung genutzt werden. Beispielsweise könnte überprüft werden, ob die Lage des Schattenwurfs 2a im ersten Kamerabild B1 der Lage der Aufhellung 2b im zweiten Kamerabild B2 entspricht.

Entscheidend für das erfindungsgemäße Verfahren ist, dass wenigstens zwei korrespondierende Kamerabilder B1, B2 aufgenommen werden, in denen der Etikettenaufdruck 4a derart abgebildet ist, dass er durch eine Verrechnung der beiden Kamerabilder B1, B2 für die Erkennung von Blasen 2 und/oder Falten unterdrückt werden kann, und die sich hinsichtlich wenigstens eines von der Blase/Falte 2 erzeugten Schattenwurfs 2a oder einer entsprechende Aufhellung 2b unterscheiden.

Für die Berechnung eignet sich beispielsweise eine Differenzbildung der Kamerabilder B1, B2. Zusätzlich kann die Helligkeit und/oder der Kontrast der einzelnen Kamerabilder B1, B2 angepasst werden. Hierbei ist es nicht notwendig, den Etikettenaufdruck 4a im berechneten Kamerabild B3 vollständig zu unterdrücken. Es genügt hierbei, verbleibende Kontrastunterschiede des Etikettenaufdrucks 4a im berechneten Kamerabild B3 unter einen vorgegebenen Schwellenwert zu drücken, so dass Kontrastunterschiede, die von einer Blase 2 und/oder Falte im berechneten Kamerabild B3 herrühren, oberhalb des Schwellenwerts liegen und somit von dem Etikettenaufdruck unterschieden werden können.

Wie die Fig. 3 und 4 verdeutlichen, ermöglicht das jeweilige Verfahren insbesondere auch eine Erkennung von Blasen 2 und/oder Falten, die von einem kontrastreichen Etikettenaufdruck 4a überlagert sind.

Der zeitliche Abstand zwischen dem ersten und dem zweiten Kamerabild B1, B2 ist so kurz, dass das zu untersuchende Etikett 4 oder ein zu untersuchender Etikettenbereich jeweils vollständig von der Kamera 9 abgebildet wird. Vorzugsweise ist der zeitliche Abstand so gering, dass das Etikett 4 in den korrespondierenden Kamerabildern B1, B2 in einer identischen Bildposition abgebildet wird. Hierbei wäre es jedoch auch denkbar, dass sich das Etikett 4 zwischen den Kamerabildern B1, B2 um einen bekannten seitlichen Versatz weiterbewegt, beispielsweise um einen oder wenige Bildpunkte, so dass die Kamerabilder B1, B2 unter Berücksichtigung des seitlichen Versatzes miteinander verrechnet werden können. Die Bildposition des Etiketts 4 in den korrespondierenden Kamerabildern B1, B2 stimmt zumindest soweit überein, dass sich vergleichbare Abbildungsverhältnisse ergeben, wie beispielsweise perspektivische Verzerrungen und dergleichen, so dass eine Verrechnung und Auswertung einander entsprechender Etikettenbereiche der Kamerabilder B1, B2 in Echtzeit möglich ist.

Obwohl lediglich die Verrechnung von zwei korrespondierenden Kamerabildern B1, B2 beschrieben wurde, ließen sich selbstverständlich auch mehrere korrespondierende Kamerabilder erfindungsgemäß verrechnen, solange die erfindungsgemäße sequentielle Belichtung mit unterschiedlicher Richtcharakteristik gegeben ist.

Die beschriebenen Ausführungsformen des erfindungsgemäßen Verfahrens und der erfindungsgemäßen Vorrichtung eignen sich für die Inspektion unterschiedlicher Behältertypen, die beispielsweise aus Glas oder Kunststoff, z. B. PET, PE, HDPE, aber auch aus Metall, z. B. Aluminium, oder aus Verbundwerkstoffen bestehen können. Ebenso können die Behälter unterschiedliche Inhaltsstoffe aufnehmen, beispielsweise Getränke wie Säfte, Milch, Mineralwasser Bier und dergleichen, aber auch Schüttgut wie Kaffee, Tabletten und dergleichen. Es versteht sich von selbst, dass die Inhaltsstoffe nicht auf Lebensmittel beschränkt sind. Möglich sind unter anderem ebenso Medikamente, Hygieneartikel, Reinigungsmittel und dergleichen.

Auch die Form der zu inspizierenden Behälter ist nicht auf die beispielhaft angedeuteten konvexen, insbesondere runden Querschnitte beschränkt. Geeignet sind ebenso plane oder konkave Flächen und Behälter mit vieleckigen oder ovalen Grundflächen und/oder Querschnitten.

Außerdem können nicht nur Blasen oder Falten erkannt werden. Die beschriebenen Vorrichtungen und Verfahren sind ebenso zur Kontrolle einer korrekten Befestigung von Etiketten auf Behältern geeignet. Es lassen sich beispielsweise abstehende Etikettenränder, unebene Klebestellen, Beschädigungen wie Löcher, insbesondere in Sleeve-Etiketten, erkennen, sofern das Etikettenmaterial in einer nicht ordnungsgemäßen Weise vom Behälter absteht

Generell lassen sich alle erhabenen Unregelmäßigkeiten oder Fehlstellen auf beliebigen Abschnitten der Behälteroberflächen erkennen, sofern an diesen ein Schattenwurf durch gerichtete Bestrahlung erzeugt werden kann. Besonders geeignet ist die Erfindung jedoch zur Erkennung von Unregelmäßigkeiten oder Fehlstellen auf bedruckten Etiketten, insbesondere aufgrund einer verbesserten Differenzierung gegenüber kontrastreichen Aufdrucken.

Es können verschiedene Etikettentypen inspiziert werden, beispielsweise Papieretiketten, Kunststoffetiketten, Rundumetiketten, Sleeves, aufschrumpfbare Etiketten, dehnbare Etiketten und dergleichen mehr.

## Patentansprüche

1. Verfahren zum Erkennen von Blasen und/oder Falten auf etikettierten Behältern (3), mit folgenden Schritten:
a) Beleuchten eines zu untersuchenden Etiketts (4) mit einem ersten Lichtblitz (7) im Auflicht und Aufnehmen eines ersten Kamerabilds (B1) des derart beleuchteten Etiketts (4);
b) Beleuchten des Etiketts mit wenigstens einem zweiten Lichtblitz (8) im Auflicht mit einer gegenüber dem Schritt a) veränderten Richtcharakteristik und Aufnehmen wenigstens eines zweiten Kamerabilds (B2) des derart beleuchteten Etiketts; und
c) Berechnen wenigstens eines Helligkeitsunterschieds zwischen dem ersten und zweiten Kamerabild,
wobei die Belichtung mit unterschiedlich gerichteten Beleuchtungen (7, 8) sequentiell von schräg oben und schräg unten auf das Etikett zu erfolgt, wobei der jeweilige Einfallswinkel (7b, 8b) zwischen der Haupteinfallrichtung (7a, 8a) der gerichteten Beleuchtung und der Hauptachse (3a) des Behälters nicht größer als 45° ist.

2. Verfahren nach Anspruch 1, wobei sich die Richtcharakteristik im Schritt a) und b) bezüglich eines Anteils an diffuser Beleuchtung unterscheidet, um unterschiedlich starke Schattenwürfe an Blasen und/oder Falten zu erzeugen.

3. Verfahren nach Anspruch 1 oder 2, wobei sich die Richtcharakteristik im Schritt a) und b) bezüglich einer Haupteinfallsrichtung der Beleuchtung unterscheidet, um unterschiedlich gerichtete Schattenwürfe an Blasen und/oder Falten zu erzeugen.

4. Verfahren wenigstens einem der vorigen Ansprüche, wobei im Schritt c) Helligkeitswerte des ersten und zweiten Kamerabilds von einander entsprechenden Bereichen des abgebildeten Etiketts miteinander verrechnet werden, wobei das Verrechnen insbesondere eine Subtraktion der Helligkeitswerte und/oder eine Angleichung einer mittleren Helligkeit des ersten und zweiten Kamerabilds umfasst.

5. Verfahren nach wenigstens einem der vorigen Ansprüche, wobei die berechneten Helligkeitsunterschiede ferner mit wenigstens einem Schwellenwert verglichen werden, um zwischen einem Etikettenaufdruck und einer Blase/Falte zu unterscheiden.

6. Verfahren nach wenigstens einem der vorigen Ansprüche, wobei der Behälter beim Aufnehmen des ersten und zweiten Kamerabilds transportiert wird.

7. Verfahren nach wenigstens einem der vorigen Ansprüche, wobei das erste und zweite Kamerabild in einem Zeitabstand von höchstens 500 µs, insbesondere von höchstens 100 µs aufgenommen werden.

8. Verfahren nach wenigstens einem der vorigen Ansprüche, wobei das Etikett mit infrarotem Licht beleuchtet wird.

9. Verfahren nach wenigstens einem der vorigen Ansprüche, wobei sich die Beleuchtung im Schritt a) und b) bezüglich ihres Spektralbereichs unterscheidet.

10. Vorrichtung (1) zum Erkennen von Blasen (2) und/oder Falten auf etikettierten Behältern (3), mit:
- einer Beleuchtungseinrichtung (5) zum sequentiellen Beleuchten eines zu untersuchenden Etiketts (4) im Auflicht mit einem ersten Lichtblitz (7) einer ersten Richtcharakteristik und mit wenigstens einem zweiten Lichtblitz (8) einer zweiten, davon abweichenden Richtcharakteristik, von schräg oben und schräg unten auf das Etikett (4) zu, wobei der jeweilige Einfallswinkel (7b, 8b) zwischen der Haupteinfallrichtung (7a, 8a) der gerichteten Beleuchtung (7, 8) und der Hauptachse (3a) des Behälters nicht größer als 45° ist;
- wenigstens einer Kamera (9) zum Aufnehmen des Etiketts in wenigstens einem ersten Kamerabild (B1) bei Beleuchtung (7, 8) mit der ersten Richtcharakteristik und in wenigstens einem zweiten Kamerabild (B2) bei Beleuchtung mit der zweiten Richtcharakteristik; und
- einer Auswerteeinheit (15) zum Berechnen wenigstens eines Helligkeitsunterschieds zwischen dem ersten und zweiten Kamerabild.

11. Vorrichtung nach Anspruch 10, wobei die Beleuchtungseinrichtung (5) wenigstens einen Flächenstrahler (11) und/oder mehrere Lichtquellen umfasst, um das Etikett (4) diffus zu beleuchten.

12. Vorrichtung nach Anspruch 10 oder 11, wobei die Beleuchtungseinrichtung (5) wenigstens einen gerichteten Strahler (12, 13, 22) umfasst, um auf dem Etikett (4) einen Schattenwurf (2a) an Blasen (2) und/oder Falten zu erzeugen, insbesondere einen im Wesentlichen vertikalen Schattenwurf.

13. Vorrichtung nach wenigstens einem der Ansprüche 10 bis 12, ferner mit einem Transportmittel (17), um den Behälter (3) während der Bildaufnahme zu transportieren.

14. Vorrichtung nach wenigstens einem der Ansprüche 10 bis 13, wobei die Beleuchtungseinrichtung (5) zur sequentiellen Kamerabelichtung mit einem Belichtungsabstand von höchstens 500 µs, insbesondere von höchstens 100 µs ausgebildet ist.

15. Vorrichtung nach wenigstens einem der Ansprüche 10 bis 14, wobei an der Beleuchtungseinrichtung (5) wenigstens zwei gerichtete Strahler (12, 13) vorgesehen sind, um an Blasen und/oder Falten wenigstens zwei Schattenwürfe (2a) in unterschiedlichen Richtungen zu erzeugen, insbesondere in einander entgegen gesetzten und/oder zueinander orthogonalen Richtungen.

## Claims

1. Method for detecting bubbles and/or creases on labeled containers (3), comprising the following steps:
a) illuminating a label (4) to be examined with a first flash of light (7) under incident light and recording a first camera image (B1) of the label (4) thus illuminated;
b) illuminating the label with at least a second flash of light (8) under incident light with a directional characteristic that is changed relative to step a) and recording at least a second camera image (B2) of the label thus illuminated; and
c) calculating at least one brightness difference between the first and second camera image,
wherein the exposure with differently directed illuminations (7, 8) takes place sequentially at an angle from above and at an angle from below onto the label, wherein the respective angle of incidence (7b, 8b) between the main incidence direction (8a, 7a) of the directed illumination and the main axis (3a) of the container is not greater than 45°.

2. Method according to claim 1, wherein the directional characteristic in step a) and b) differs in terms of a proportion of diffuse illumination in order to cast differently large shadows at bubbles and/or creases.

3. Method according to claim 1 or 2, wherein the directional characteristic in step a) and b) differs in terms of a main incidence direction of the illumination for casting differently directed shadows at bubbles and/or creases.

4. Method according to at least one of the preceding claims, wherein in step c) brightness values of the first and the second camera image of mutually corresponding areas of the imaged label are offset against each other, wherein the offsetting comprises in particular subtraction of the brightness values and/or an approximation of an average brightness of the first and the second camera image.

5. Method according to at least one of the preceding claims, wherein the calculated brightness differences are further compared to at least one threshold value to differentiate between a label print and a bubble/crease.

6. Method according to at least one of the preceding claims, wherein the container is being conveyed when recording the first and the second camera image.

7. Method according to at least one of the preceding claims, wherein the first and the second camera image are taken at a time interval of at most 500 µs, in particular of at most 100 µs.

8. Method according to at least one of the preceding claims, wherein the label is illuminated with infra-red light.

9. Method according to at least one of the preceding claims, wherein the illumination in step a) and b) differs with respect to its spectral range.

10. Apparatus for detecting bubbles (2) and/or creases on labeled containers (3), comprising:
- an illumination device (5) for sequentially illuminating a label (4) to be examined under incident light with a first flash of light (7) of a first directional characteristic and
with at least a second flash of light (8) of a second directional characteristic differing therefrom, at an angle from above and at an angle from below onto the label (4), wherein the respective angle of incidence (7b, 8b) between the main incidence direction (7a, 8a) of the directed illumination (7, 8) and of the main axis (3a) of the container is not greater than 45°;
- at least one camera (9) for recording the label in at least a first camera image (B1) with an illumination (7, 8) having the first directional characteristic and in at least a second camera image (B2) with an illumination having the second directional characteristic; and
- an evaluation unit (15) for calculating at least one brightness difference between the first and the second camera image.

11. Apparatus according to claim 10, wherein the illumination device (5) comprises at least one surface radiator (11) and/or multiple light sources for diffuse illumination of the label (4).

12. Apparatus according to claim 10 or 11, wherein the illumination device (5) comprises at least one directional radiator (12, 13, 22) to cast a shadow onto the label (4) at bubbles (2) and/or creases, in particular a substantially vertically cast shadow.

13. Apparatus according to at least one of claims 10 to 12, further comprising a conveyor device (17) to convey the container (3) during imaging.

14. Apparatus according to at least one of claims 10 to 13, claim 10, wherein the illumination device (5) is designed for sequential camera exposure having an exposure interval of at most 500 µs, in particular of at most 100 µs.

15. Apparatus according to at least one of claims 1o to 14, wherein at least two directional radiators (12, 13) are provided on the illumination device (5) to create at least two shadows (2a) at bubbles and/or creases cast in different directions, particularly in directions opposite and/or orthogonal to one another.

## Revendications

1. Procédé de détection de cloques et/ou de plis sur des contenants étiquetés (3), comprenant les étapes suivantes :
a) l'éclairement d'une étiquette (4) à contrôler, à l'aide d'un premier éclair de lumière (7) en lumière incidente, et le relevé d'une première image de caméra (B1) de l'étiquette (4) ainsi éclairée,
b) l'éclairement de l'étiquette à l'aide d'au moins un deuxième éclair de lumière (8) en lumière incidente, avec une caractéristique de référence modifiée par rapport à l'étape a), et le relevé d'une deuxième image de caméra (B2) de l'étiquette ainsi éclairée, et
c) le calcul d'au moins une différence de luminosité entre la première et la deuxième image de caméra,
procédé d'après lequel l'éclairement est effectué séquentiellement à l'aide d'éclairages (7, 8) d'orientations différentes, de manière inclinée par le haut et de manière inclinée par le bas en direction de l'étiquette, l'angle d'incidence respectif (7b, 8b) entre la direction principale d'incidence (7a, 8a) de l'éclairage orienté et l'axe principal (3a) du contenant n'étant pas supérieur à 45°.

2. Procédé selon la revendication 1, d'après lequel la caractéristique de référence dans l'étape a) et dans l'étape b) se distingue quant à une fraction d'éclairement diffus, en vue de produire des projections d'ombre d'intensité différente au niveau de cloques et/ou de plis.

3. Procédé selon la revendication 1 ou la revendication 2, d'après lequel la caractéristique de référence dans l'étape a) et dans l'étape b) se distingue quant à une direction d'incidence principale de l'éclairement, en vue de produire des projections d'ombre d'orientation différente au niveau de cloques et/ou de plis.

4. Procédé selon l'une au moins des revendications précédentes, d'après lequel dans l'étape c), on combine par calcul, des valeurs de luminosité de la première et de la deuxième image de caméra de zones correspondantes de l'étiquette reproduite, le calcul comprenant notamment une soustraction des valeurs de luminosité et/ou une harmonisation d'une luminosité moyenne de la première et de la deuxième image de caméra.

5. Procédé selon l'une au moins des revendications précédentes, d'après lequel les différences de luminosité calculées sont par ailleurs comparées à au moins une valeur de seuil, pour assurer la distinction entre une impression sur l'étiquette et une cloque/un pli.

6. Procédé selon l'une au moins des revendications précédentes, d'après lequel le contenant est transporté lors du relevé de la première et de la deuxième image de caméra.

7. Procédé selon l'une au moins des revendications précédentes, d'après lequel la première et la deuxième image de caméra sont relevées dans un intervalle de temps d'au plus 500 µs, notamment d'au plus 100 µs.

8. Procédé selon l'une au moins des revendications précédentes, d'après lequel l'étiquette est éclairée à l'aide de lumière infrarouge.

9. Procédé selon l'une au moins des revendications précédentes, d'après lequel l'éclairage dans l'étape a) et l'étape b) se différencie quant à sa plage spectrale.

10. Dispositif (1) de détection de cloques (2) et/ou de plis sur des contenants étiquetés (3), comprenant :
- un dispositif d'éclairage (5) pour éclairer séquentiellement une étiquette (4) en lumière incidente à l'aide d'un premier éclair de lumière (7) d'une première caractéristique de référence, et à l'aide d'au moins un deuxième éclair de lumière (8) d'une deuxième caractéristique de référence, qui se distingue de la première, de manière inclinée par le haut et de manière inclinée par le bas en direction de l'étiquette (4), l'angle d'incidence respectif (7b, 8b) entre la direction principale d'incidence (7a, 8a) de l'éclairage orienté (7, 8) et l'axe principal (3a) du contenant, n'étant pas supérieur à 45°,
- au moins une caméra (9) destinée à relever l'image de l'étiquette selon au moins une première image de caméra (B1) dans le cas de l'éclairement (7, 8) avec la première caractéristique de référence, et selon au moins une deuxième image de caméra (B2) dans le cas de l'éclairement avec la deuxième caractéristique de référence, et
- une unité de traitement de données (15) pour calculer au moins une différence de luminosité entre la première et la deuxième image de caméra.

11. Dispositif selon la revendication 10, dans lequel le dispositif d'éclairage (5) comprend au moins un projecteur de surface (11) et/ou plusieurs sources de lumière, pour éclairer l'étiquette (4) de manière diffuse.

12. Dispositif selon la revendication 10 ou la revendication 11, dans lequel le dispositif d'éclairage (5) comprend au moins un projecteur orienté (12, 13, 22) pour produire sur l'étiquette (4), une projection d'ombre (2a) au niveau de cloques (2) et/ou de plis, notamment une projection d'ombre sensiblement verticale.

13. Dispositif selon l'une au moins des revendications 10 à 12, comprenant par ailleurs un moyen de transport (17), pour transporter le contenant (3) pendant le relevé d'image.

14. Dispositif selon l'une au moins des revendications 10 à 13, dans lequel le dispositif d'éclairage (5) est configuré pour un éclairement séquentiel de caméra avec un intervalle d'éclairement d'au plus 500 µs, notamment d'au plus 100 µs.

15. Dispositif selon l'une au moins des revendications 10 à 14, dans lequel sur le dispositif d'éclairage (5) sont prévus au moins deux projecteurs orientés (12, 13), en vue de produire au niveau de cloques et/ou de plis, au moins deux projections d'ombre (2a) dans des directions différentes, notamment dans des directions mutuellement opposées et/ou orthogonales entre elles.
